# EUROPÄISCHE PATENTSCHRIFT

(11) **EP 2 102 468 B1**
(45) Veröffentlichungstag und Bekanntmachung des Hinweises auf die Patenterteilung: **16.02.2011**
(21) Anmeldenummer: 07819285.3
(22) Anmeldetag: 24.10.2007
(51) Int. Cl.: F02B 37/013, F02B 37/18, F02B 39/00, F01N 13/10

(54) **MEHRSTUFIGE TURBOLADERANORDNUNG**
MULTISTEP TURBOCHARGER ARRANGEMENT
ENSEMBLE DE TURBOCOMPRESSEUR ÉTAGÉ

(30) Priorität: 21.12.2006 DE 102006060743
(43) Veröffentlichungstag der Anmeldung: 23.09.2009
(73) Patentinhaber: BorgWarner, Inc., Auburn Hills, MI 48326-2872 (US)
(72) Erfinder: STILGENBAUER, Michael, 67295 Bolanden (DE); SCHALL, Gerald, 67240 Bobenheim-Roxheim (DE)
(74) Vertreter: Schmitz, Hans-Werner
(86) Internationale Anmeldenummer: PCT/EP2007/009233
(87) Internationale Veröffentlichungsnummer: WO 2008/083769

(56) Entgegenhaltungen:
- EP-A- 1 136 676
- EP-A- 1 219 799
- EP-A- 1 626 169
- WO-A-2007/084592
- DE-A1- 10 230 934

## Beschreibung

Die Erfindung betrifft eine mehrstufige Turboladeranordnung gemäß dem Oberbegriff des Anspruchs 1. Eine derartige Turboladeranordnung ist aus der EP-A- 1 626 169 bekannt.

Bekannte Turboladeranordnungen dieser Art weisen den Nachteil einer aufwendigen Konstruktion mit Klappen, Buchsen und Steuerdosen auf, die in hohem Maße verschleißanfällig sind, insbesondere durch einen anfälligen Kurbeltrieb. Desweiteren sind gleichmäßige und kontinuierliche Querschnittsöffnungen, die zur Regelgüte bzw. Qualität der Regelcharakteristik beitragen, nur bedingt umsetzbar.

Es ist daher Aufgabe der vorliegenden Erfindung, eine mehrstufige Turboladeranordnung gemäß dem Oberbegriff.des Anspruches 1 zu schaffen, dessen Regelsystem eine verbesserte Regelgüte sowie einen vereinfachten und kompakten Aufbau hat.

Die Lösung dieser Aufgabe erfolgt durch die Merkmale des Anspruches 1.

Erfindungsgemäß ist eine vereinfachte Regeleinheit zur Regelung der Wirkverbindung zwischen dem Hochdruckturbolader bzw. der Hochdruckstufe und dem Niederdruckturbolader bzw. der Niederdruckstufe der Turboladeranordnung vorgesehen, die im Krümmer zwischen der Hochdruckstufe und der Niederdruckstufe angeordnet ist und in dem alle erforderlichen Strömungskanäle integriert sind.

Die Unteransprüche haben vorteilhafte Weiterbildungen der Erfindung zum Inhalt.

Weitere Einzelheiten, Vorteile und Merkmale der vorliegenden Erfindung ergeben sich aus nachfolgender Beschreibung von Ausführungsbeispielen anhand der Zeichnung. Darin zeigt:
- Fig. 1: eine erste Ausführungsform einer im Beispiels- falle zweistufigen Turboladeranordnung gemäß der vorliegenden Erfindung,
- Fig. 2: eine teilweise aufgeschnittene perspektivische Teilansicht der Turboladeranordnung gemäß Fig. 1,
- Fig. 3: eine aufgeschnittene Teilansicht der Turboladeranordnung in einem ersten Schaltzu- stand,
- Fig. 4: eine der Fig. 3 entsprechende Ansicht der Turboladeranordnung in einem zweiten Schaltzu- stand,
- Fig. 5: eine Variante der Turboladeranordnung im Schaltzustand gemäß Fig. 4,
- Fig. 6: eine der Fig. 3 entsprechende Darstellung der er- findungsgemäßen Turboladeranordnung in einem dritten Schaltzustand, und
- Fig. 7 und 8: die Variante gemäß Fig. 5 im Schaltzustand gemäß Fig. 6.

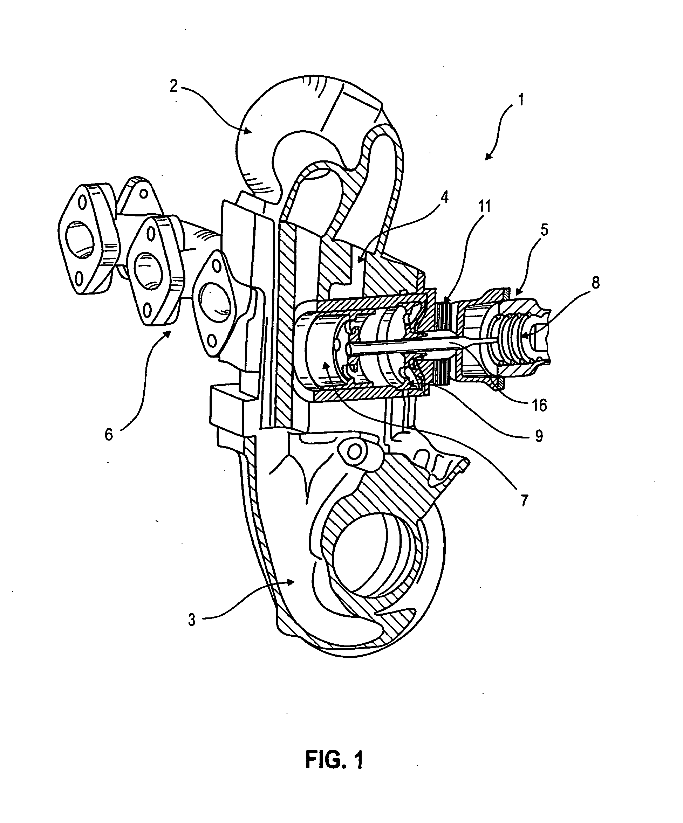

In Fig. 1 ist eine mehrstufige, im Beispielsfalle zweistufige Turboladeranordnung 1 für einen Verbrennungsmotor, insbesondere einen Diesel- oder Otto-Motor, dargestellt, wobei der Motor jedoch in der Fig. 1 zur Vereinfachung der Darstellung nicht gezeigt ist.

Die Turboladeranordnung 1 weist eine Hochdruckstufe 2 sowie eine Niederdruckstufe 3 auf, die jeweils von einem entsprechend ausgeführten Turbolader gebildet werden, von denen in den Figuren jeweils das Turbinengehäuse der Turbine dargestellt ist.

Die Hochdruckstufe 2 und die Niederdruckstufe 3 sind über ein öffen- und schließbares Strömungskanalsystem 4 miteinander in Wirkverbindung bringbar, wozu eine Regeleinheit 5 vorgesehen ist.

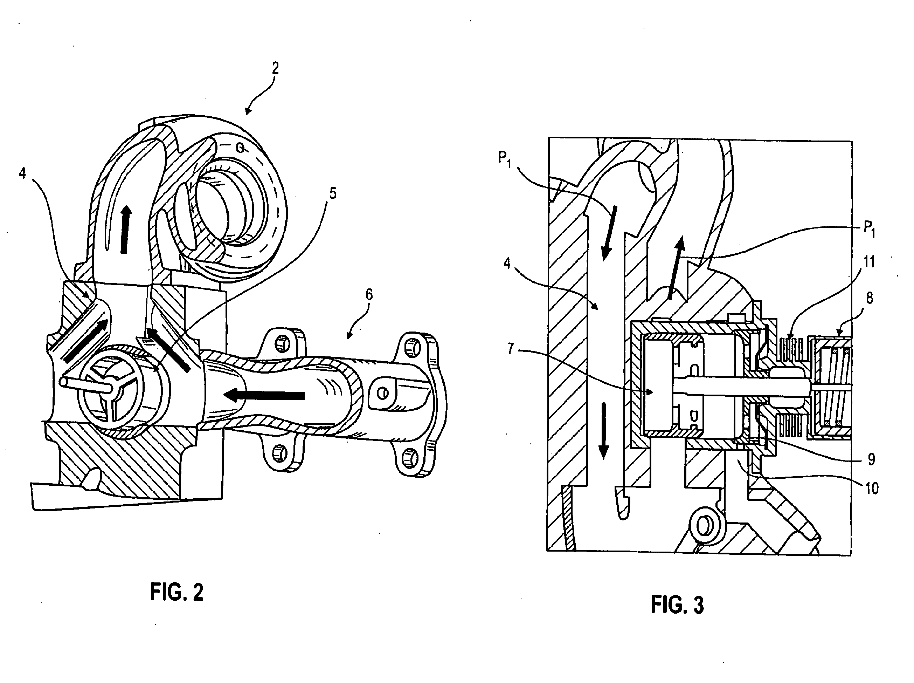

Wie sich insbesondere aus den Fig. 1 und 2 ergibt, ist die Regeleinheit 5 in einem Krümmer 6 zwischen der Hochdruckstufe 2 und der Niederdruckstufe 3 angeordnet. Wie sich aus einer Zusammenschau sämtlicher Figuren ergibt, ist im Krümmer 6 ferner das Strömungskanalsystem 4 integriert, das mittels der Regeleinheit 5 geöffnet und geschlossen werden kann.

Bei der Ausführungsform gemäß den Fig. 1 bis 3 sowie 4 und 6 weist die Regeleinheit 5 zunächst einen Regelschieber 7 auf, der mittels eines Aktuators 8 betätigt werden kann, wozu der Regelschieber 7 mit Hilfe einer vom Aktuator 8 angetriebenen Betätigungsstange 16 entlang einer durch die Betätigungsstange 16 verlaufenden Achse verschoben werden kann.

Bei der zuvor genannten Ausführungsform weist die Regeleinheit 5 ferner einen Bypassschieber 9 auf, der zum Öffnen und Schließen eines Bypasskanals 10, wie auch der Regelschieber 7 in einem Gehäuse 17 der Regeleinheit 5, axial verschieblich angeordnet ist. In der beispielsweise in Fig. 3 dargestellten Schaltposition schließt der Bypassschieber 9 den Bypasskanal 10, wobei er in seine Schließstellung vorgespannt ist, beispielsweise mittels einer geeigneten Feder.

In der insbesondere aus Fig. 3 ersichtlichen ersten Schaltposition verschließt der Regelschieber 7 den durch einen Strömungskanal 12 des Strömungskanalsystems 4 gebildeten direkten Weg zur Niederdruckstufe 3, wobei diese erste Schaltposition bei kleinen Motordrehzahlen und damit kleinen Abgasströmen eingestellt wird. Daher expandiert das Abgas in der in Fig. 3 gezeigten ersten Schaltposition der Regeleinheit 5 in der Hochdruckstufe 2. Dies ist durch die Pfeile P₁ in Fig. 3 symbolisiert.

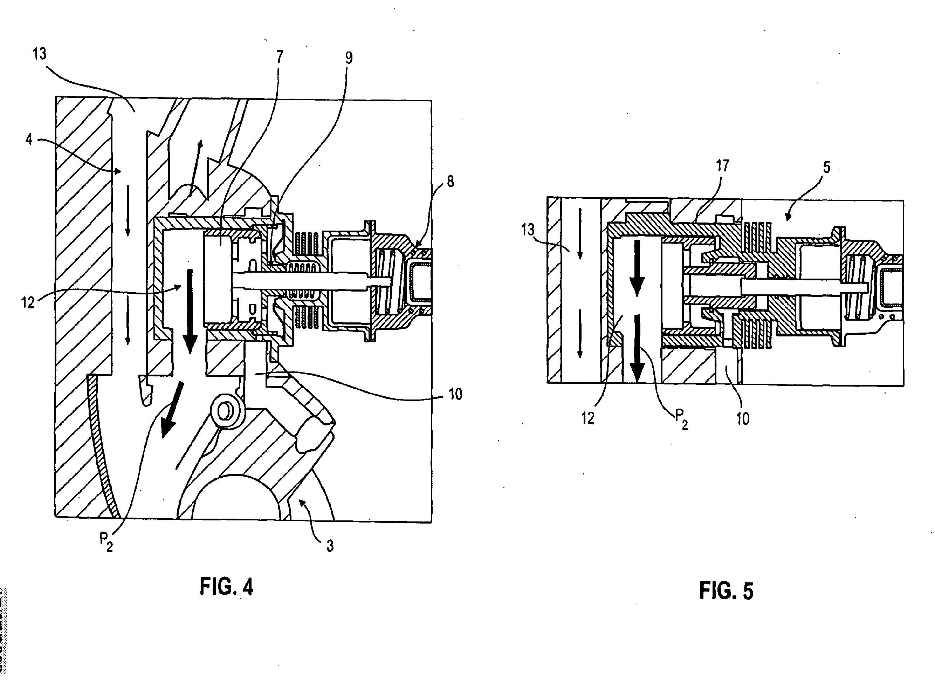

In der in Fig. 4 dargestellten zweiten Schaltposition öffnet der Regelschieber 7 bei zunehmender Motordrehzahl, vorzugsweise schrittweise, den Strömungskanal 12 bzw. Krümmerquerschnitt, so dass das Abgas direkt zur Niederdruckstufe 3 geleitet wird, was durch die Pfeile P₂ in Fig. 4 symbolisiert wird.

Eine entsprechende Schaltposition ist in Fig. 5 dargestellt, die eine Variante der Ausführungsform gemäß Fig. 4 darstellt, da hier kein separater Bypassschieber vorgesehen ist. Wie die Darstellungen der Fig. 4 und 5 zeigen, ist in dieser zweiten Schaltposition der Bypasskanal 10 jeweils geschlossen.

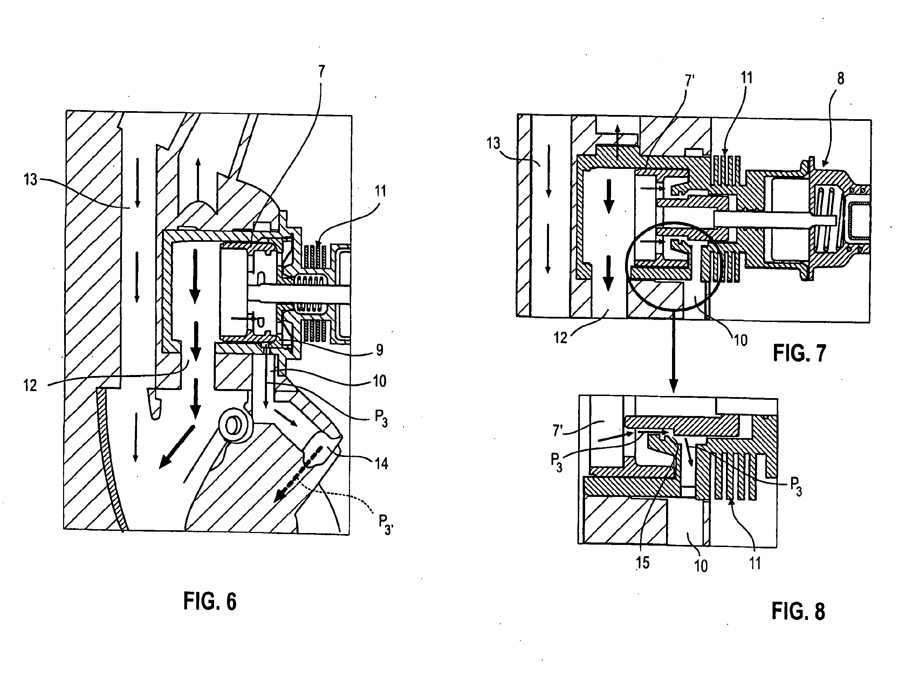

In Fig. 6 ist die Ausführungsform gemäß den Fig. 1 bis 4 in einer dritten Schaltposition dargestellt. In dieser Schaltposition schiebt der Regelschieber 7 den Bypassschieber 9 axial zurück, wodurch der Bypasskanal 10 bzw. die Bypasskanalabschnitte des Bypasskanals 10 freigegeben werden. Somit kann ein Teil des Abgases an der Niederdruckspirale bzw. dem Niederdruckturbinengehäuse vorbei direkt zum Turbinengehäuseaustritt (Niederdruckstufe) geleitet werden, was durch den gestrichelten Pfeil P₃ symbolisiert ist.

Eine entsprechende Schaltposition der Variante gemäß Fig. 5 ist in den Fig. 7 und 8 dargestellt, wozu der Regelschieber 7' dieser Variante einen insbesondere aus Fig. 8 ersichtlichen Verbindungskanal 15 aufweist, der, wie bei der zuvor beschriebenen Ausführungsvariante, den Bypasskanal 10 freigibt, so dass eine Ableitung eines Teils des Abgases direkt zum Turbinengehäuseaustritt der Niederdruckstufe 3 möglich ist.

Ergänzend zur voranstehenden schriftlichen Offenbarung der Erfindung wird hiermit explizit auf die zeichnerische Darstellung der Erfindung in den Fig. 1 bis 8 verwiesen.

### Bezugszeichenliste

- 1: Turboladeranordnung
- 2: Hochdruckstufe
- 3: Niederdruckstufe
- 4: Strömungskanalsystem
- 5: Regeleinheit
- 6: Krümmer/Abgaskrümmer
- 7: Regelschieber
- 7': Regelschieber
- 8: Aktuator
- 9: Bypassschieber
- 10: Bypass
- 11: Kühlkörper
- 12, 13: Strömungskanal
- 14: Turbinengehäuseaustritt
- 15: Verbindungskanal
- 16: Betätigungsstange
- 17: Gehäuse
- P₁, P₂, P₃,: Pfeile

## Patentansprüche

1. Mehrstufige Turboladeranordnung (1) für einen Verbrennungsmotor
- mit einer Hochdruckstufe (2),
- mit einer Niederdruckstufe (3), die über ein Öffen- und schließbares Strömungskanalsystem (4) mit der Hochdruckstufe (2) in Wirkverbindung bringbar ist, und
- mit einer Regeleinheit (5) zur Regelung der Wirkverbindung zwischen der Hochdruckstufe (2) und der Niederdruckstufe (3),
- wobei die Regeleinheit (5) und das Strömungskanalsystem (4) in einem zwischen der Hochdruckstufe (2) und der Niederdruckstufe (3) angeordneten Motorabgaskrümmer (6) integriert sind,
**dadurch gekennzeichnet,**
- **dass** die Regeleinheit (5) einen axial verschieblichen Regelschieber (7) aufweist, der mittels eines Aktuators (8) betätigbar ist, wobei der Regelschieber (7) einen durch einen Strömungskanal (12) des Strömungskanalsystems (4) gebildeten direkten Weg zur Niederdruckstufe (3) verschließt bzw. bei zunehmender Motordrehzahl öffnet.

2. Turboladeranordnung nach Anspruch 1, **dadurch gekennzeichnet, dass** die Regeleinheit (5) einen Bypassschieber (9) aufweist, mit dem ein Bypass (10) öffen- und schließbar ist und der in seine Bypassschließstellung vorgespannt ist.

3. Turboladeranordnung nach Anspruch 2, **dadurch gekennzeichnet, dass** der Bypassschieber (9) mittels des Regelschiebers (7) in seine Bypassöffnungsstellung bewegbar, insbesondere axial verschiebbar, ist.

4. Turboladeranordnung nach Anspruch 1, **dadurch gekennzeichnet, dass** der Regelschieber (7') einen Verbindungskanal (15) aufweist, der mit dem Bypass (10) des Strömungskanalsystems (4) in Strömungsverbindung bringbar ist.

## Claims

1. Multi-stage turbocharger arrangement (1) for an internal combustion engine,
- having a high-pressure stage (2),
- having a low-pressure stage (3) which can be operatively connected to the high-pressure stage (2) by means of an openable and closable flow duct system (4), and
- having a regulating unit (5) for regulating the operative connection between the high-pressure stage (2) and the low-pressure stage (3),
- the regulating unit (5) and the flow duct system (4) being integrated in an engine exhaust-gas manifold (6) which is arranged between the high-pressure stage (2) and the low-pressure stage (3),
**characterized in that**
- the regulating unit (5) has a regulating slide (7) which can slide axially and which can be actuated by means of an actuator (8), the regulating slide (7) closing or, with increasing engine speed, opening the direct path, which is formed by a flow duct (12) of the flow duct system (4), to the low-pressure stage (3).

2. Turbocharger arrangement according to Claim 1, **characterized in that** the regulating unit (5) has a bypass slide (9), by means of which a bypass (10) can be opened and closed and which is preloaded into its bypass closed position.

3. Turbocharger arrangement according to Claim 2, **characterized in that** the bypass slide (9) can be moved, in particular slid axially, into its bypass open position.

4. Turbocharger arrangement according to Claim 1, **characterized in that** the regulating slide (7') has a connecting duct (15) which can be flow-connected to the bypass (10) of the flow duct system (4).

## Revendications

1. Ensemble de turbocompresseur (1) à plusieurs étages pour un moteur à combustion interne, comprenant :
- un étage haute pression (2),
- un étage basse pression (3), qui peut être amené en liaison fonctionnelle, par le biais d'un système de canal d'écoulement (4) pouvant être ouvert et fermé, avec l'étage haute pression (2), et
- une unité de régulation (5) pour la régulation de la liaison fonctionnelle entre l'étage haute pression (2) et l'étage basse pression (3),
- l'unité de régulation (5) et le système de canal d'écoulement (4) étant intégrés dans un collecteur de gaz d'échappement du moteur (6) disposé entre l'étage haute pression (2) et l'étage basse pression (3),
**caractérisé en ce que**
- l'unité de régulation (5) présente un coulisseau de régulation (7) coulissant axialement, qui peut être actionné au moyen d'un actionneur (8), le coulisseau de régulation (7) fermant une course directe formée par un canal d'écoulement (12) du système de canal d'écoulement (4) par rapport à l'étage basse pression (3) ou l'ouvrant lorsque le régime du moteur augmente.

2. Ensemble de turbocompresseur selon la revendication 1, **caractérisé en ce que** l'unité de régulation (5) présente un coulisseau de dérivation (9) avec lequel une dérivation (10) peut être ouverte et fermée, et qui est précontraint dans sa position de fermeture de la dérivation.

3. Ensemble de turbocompresseur selon la revendication 2, **caractérisé en ce que** le coulisseau de dérivation (9) peut être déplacé au moyen du coulisseau de régulation (7) dans sa position d'ouverture de la dérivation, notamment par coulissement axial.

4. Ensemble de turbocompresseur selon la revendication 1, **caractérisé en ce que** le coulisseau de régulation (7') présente un canal de liaison (15) qui peut être amené en liaison d'écoulement avec la dérivation (10) du système de canal d'écoulement (4).
